# EUROPÄISCHE PATENTSCHRIFT

(11) **EP 0 603 379 B1**
(45) Veröffentlichungstag und Bekanntmachung des Hinweises auf die Patenterteilung: **28.04.1999**
(21) Anmeldenummer: 93915859.8
(22) Anmeldetag: 09.07.1993
(51) Int. Cl.: B01D 21/06, B01D 21/20, B01D 21/24

(54) **UNTERWASSERRÄUMER FÜR RUNDKLÄRBECKEN**
SUBMERGED SCRAPER FOR ROUND SETTLING POOLS
RACLEUR IMMERGE POUR BASSINS RONDS DE DECANTATION

(30) Priorität: 09.07.1992 DE 4222559
(43) Veröffentlichungstag der Anmeldung: 29.06.1994
(73) Patentinhaber: Huber, Hans-Georg, D-92334 Berching (DE)
(72) Erfinder: Huber, Hans-Georg, D-92334 Berching (DE)
(74) Vertreter: Rehberg, Elmar, Dipl.-Ing.
(86) Internationale Anmeldenummer: EP9301795
(87) Internationale Veröffentlichungsnummer: WO9401191

(56) Entgegenhaltungen:
- DE-A- 2 160 194
- DE-A- 2 551 907
- DE-A- 3 540 606
- GB-A- 502 469
- US-A- 1 972 584
- US-A- 3 465 886
- US-A- 4 005 019

## Beschreibung

Die Erfindung bezieht sich auf einen Unterwasserräumer für Rundklärbecken. Solche Rundklärbecken werden insbesondere in der Klärtechnik benutzt, um eine Sedimentation des Schlamms herbeizuführen und das insoweit geklärte Abwasser über eine im Bereich des Wasserspiegels angeordnete Ablaufrinne abzuziehen. Der sedimentierte Schlamm wird von einem Unterwasserräumer in einen zentral angeordneten, trichterförmigen Schlammabzug gefördert, an den eine Abzugsleitung über eine Pumpe angeschlossen ist o. dgl..

Ein Unterwasserräumer ist aus der DE-B-25 51 907 bekannt. Das Rundklärbecken ist von einer ortsfest angeordneten Brücke überspannt, die sich auf der Beckenkrone abstützt. An der ortsfesten Brücke sind über ein zentrales Trag- und Führungslager Einbauten aufgehängt, die aus zwei konzentrischen Hohlzylindern bestehen. Von dem äußeren Hohlzylinder ragen radial sich erstreckende Kragarme ab, an denen Räumschilde aufgehängt sind, die in der Nähe der Beckensohle an dieser entlangstreichen und über Stützräder abgestützt sind. Auf der ortsfesten Brücke ist ein Getriebemotor mit Antriebszahnrad gelagert, wobei das Antriebszahnrad mit einem Antriebszahnkranz an dem äußeren Zylinder zusammenarbeitet. Über die zylinderförmigen Einbauten wird somit zentral der Antrieb auch der Räumschilde bewirkt. Die Räumschilde können so ausgebildet sein, daß sie auch teilweise in den trichterförmigen Schlammabzug hineinragen.

Vorteilhaft an diesem bekannten Unterwasserräumer ist, daß die Beckenkrone nicht wechselnd und durch eine umlaufende Brücke beansprucht wird, sondern nur durch die örtliche Auflagerung der ortsfesten Brücke. Die Strömungsleitung durch die hohlzylindrischen Einbauten wird verbessert. Nachteilig ist die aufwendige Brücke mit ihrer Lagerung sowie eine gewisse Beeinflussung der Strömung im Rundklärbecken durch die zylinderförmigen Einbauten.

Aus der DE-A-35 40 606 ist ein Unterwasserräumer mit einer umlaufend angetriebenen Brücke bekannt, die sich auf der Beckenkrone abstützt. Die Räumschilde sind in einem radial innenliegenden Bereich über Verstrebungen an der Brücke aufgehängt, so daß der Antrieb der Brücke zugleich den Antrieb der Räumschilde bewirkt. Damit sitzen der Motor und die übrigen Antriebsmittel, wie beispielsweise ein Übersetzungsgetriebe, vorteilhaft oberhalb und damit außerhalb des Wassers. Es ist ein Mittelbauwerk vorgesehen, auf dem sich die Brücke zusätzlich abstützen kann. Ein solcher Unterwasserräumer mit einer umlaufend angetriebenen Brücke ist sehr aufwendig. Er führt bei seinem Antrieb zu Beschädigungen der Beckenkrone, zumal er groß und schwer ausgebildet sein muß. Die Brücke muß beispielsweise in der Lage sein, einem entsprechenden Winddruck standzuhalten und trotzdem ein ordnungsgemäßes Arbeiten zu gewährleisten. Nachteilig ist das Mittelbauwerk, welches als getrenntes Bauwerk innerhalb des Rundklärbeckens errichtet werden muß. Innerhalb des Mittelbauwerks ist der Einlauf für das Abwasser vorgesehen. Das Mittelbauwerk beeinflußt durch seine Anwesenheit die Strömung im Rundklärbecken. Auch sind die Verstrebungen zum Aufhängen der Räumschilde an der Brücke notwendigerweise über die gesamte Niveauhöhe des Wassers hindurchgeführt und beeinflussen die Strömung im Rundklärbecken negativ. Es tritt eine gewisse Rührwirkung ein, die eine nachteilige Aufwirbelung nach sich zieht. Durch die ausladenden Verstrebungen ist nur ein kleiner Teil des Rundklärbeckens für die Anordnung von Lamellenpaketen nutzbar.

Ein weiterer Unterwasserräumer ist aus der DE-A-2 160 194 bekannt. Das Rundklärbecken wird von einer ortsfest angeordneten und auf einer mittigen Vertikalsäule abgestützten Brücke überspannt, die zugleich die Zuleitung für das mit Schlamm beladene und zu klärende Abwasser aufnimmt. Unterhalb des Wasserspiegels ist ein fachwerkartig ausgesteifter Rahmen vorgesehen, der an seiner der Beckensohle zugekehrten Seite ein Raumschild in Form einer Leiste trägt, die beim Umlauf des Rahmens an der Beckensohle entlangstreicht. Rahmen und Räumschild bilden eine unter Wasser angeordnete Baueinheit, die durch einen ebenfalls unter der Wasseroberfläche angeordneten Motor angetrieben wird. Zu Revisionszwecken ist der Rahmen mit einem Gelenk versehen, wodurch es möglich wird, einen Teil des Rahmens mit dem Motor so nach oben zu klappen, daß sich der Motor oberhalb der Wasseroberfläche befindet.

Ein weiterer Unterwasserräumer ist aus der US-A-1,972,584 bekannt. Der Unterwasserräumer für unrunde Klärbecken weist einen Rahmen und ein an dem Rahmen befestigtes, an der Beckensohle des unrunden Klärbeckens entlangstreichendes, sich etwa radial erstreckendes Räumschild auf. Das Räumschild erstreckt sich im wesentlichen in einer geneigten Ebene parallel zur Beckensohle und bildet mit dem Rahmen eine unter Wasser angeordnete Baueinheit, die umlaufend angetrieben ist. Ein Antriebsmotor ist oberhalb der Wasseroberfläche ortsfest im Bereich der Beckenwand vorgesehen. Der Antriebsmotor ist mit einem Antriebsritzel verbunden, das in eine mit dem Rahmen umlaufende Kette eingreift.

Der Erfindung liegt die Aufgabe zugrunde, einen Unterwasserräumer der eingangs beschriebenen Art bereitzustellen, der weder eine Brücke noch einen Mittelbau benötigt und somit die damit verbundenen Nachteile vermeidet. Mit dem neue Unterwasserräumer soll eine besonders gleichmäßige Räumung des Schlamms ohne Aufwirbelung erreicht werden.

Erfindungsgemäß wird dies bei dem Unterwasserräumer durch die Kombination der Merkmale des Anspruchs 1 erreicht. Bevorzugte Ausgestaltungen sind in den abhängigen Ansprüchen 2 und 3 definiert. Die Erfindung geht von der Erkenntnis aus, auf die Anordnung und Ausbildung einer Brücke und eines aufwendigen Mittelbaus zu verzichten und stattdessen möglichst nur solche Teile einzusetzen, die sich unterhalb der Wasseroberfläche befinden. Das Räumschild wird hier mit einem diesem zugeordneten Rahmen ausgesteift und es wird ein Zahnkranz eingesetzt, über den der Antrieb erfolgt. Dabei kann der Zahnkranz radial außen oder radial innen am Räumschild angreifen oder angeordnet sein, wobei die Möglichkeit besteht, daß der Zahnkranz entweder Bestandteil des Rahmens ist, also auf dem Rahmen angeordnet ist und damit mit umläuft, oder aber Bestandteil des Rundklärbeckens ist, also ortsfest an diesem vorgesehen und angeordnet ist.

Bei der erfindungsgemäßen Ausbildung des Unterwasserräumers kommt eine Brücke und ein Mittelbau in Fortfall. Auch die Beckenwandung im Bereich der Beckenkrone wird damit frei von einer Belastung gehalten. Mit Ausnahme vielleicht des Antriebsmotors sitzen alle Teile unter Wasser, so daß sich beispielsweise der Winddruck nicht mehr nachteilig auswirken kann. Die Ausbildung des Rahmens ist wesentlich geringer zu dimensionieren als eine umlaufend angetriebene Brücke. Auch der einzusetzende Antrieb kann entsprechend schwächer dimensioniert werden. Der erfindungsgemäße Unterwasserräumer weist den weiteren Vorteil auf, daß er die Strömungsverhältnisse in dem Rundklärbecken nur minimal stört und damit die Absetzwirkung nicht beeinträchtigt. Da sich der Rahmen und das Räumschild sowie der Zahnkranz in einer Schicht benachbart zur Beckensohle befinden, entsteht oberhalb des Rahmens ein Freiraum, der z. B. für die Anordnung von Lamellen und anderen Einbauten genutzt werden kann. Der neue Unterwasserräumer eignet sich hinsichtlich seiner konstruktiven Ausbildung sowohl für kleine, mittlere wie auch sehr große Durchmesser von Rundklärbecken.

Der das Räumschild tragende Rahmen ist in Draufsicht sektorartig gestaltet und erstreckt sich im wesentlichen in einer horizontalen oder geneigten Ebene parallel zur Beckensohle. Wenn der Antrieb radial von außen erfolgt, ist der sektorartige Rahmen in der üblichen Richtung entsprechend der flächenmäßigen Aufteilung des Rundklärbeckens angeordnet. Wenn dagegen der Antrieb radial innen erfolgt, ist die sektorartige Ausbildung und Anordnung des Rahmens umgekehrt zu den Sektoren des Rundklärbeckens vorgesehen. Der neue Unterwasserräumer kann vorteilhaft auch dann eingesetzt werden, wenn das Rundklärbecken mit horizontaler Beckensohle erstellt wird. Damit ist die bauwerkseitige Herstellung eines solches Rundklärbeckens erheblich vereinfacht. Eine sonst häufig erforderliche Grundwasserabsenkung kann somit umgangen werden.

Der sektorartige Rahmen kann radial außen geführt und abgestützt sein, d. h. der Antrieb erfolgt radial in einem äußeren Bereich, so daß der eingesetzte Zahnkranz einen Durchmesser aufweist, der etwa dem Durchmesser des Rundklärbeckens entspricht. Eine solche Anordnung mit radialem Außenantrieb ist z. B. vorteilhaft, wenn der Antriebsmotor ortsfest angeordnet wird, so daß der Zahnkranz zwar einen großen Durchmesser bekommt, aber andererseits Bestandteil des Rahmens wird und damit auch zu 8 dessen Aussteifung beiträgt.

Der sektorartige Rahmen kann aber auch radial innen geführt und abgestützt sein. Dies hat den Vorteil, daß der Zahnkranz einen relativ kleinen Durchmesser bekommt. Dies gilt sowohl für ortsfeste Anordnung des Zahnkranzes wie auch für eine umlaufende Anordnung.

Somit kann der Zahnkranz an dem Rahmen des Räumschilds und damit umlaufend angeordnet sein und es kann ein Antriebsmotor mit Ritzel ortsfest im Bereich der Beckenwand oder im Mittelbereich am Rundklärbecken vorgesehen sein. Auch die umgekehrte Anordnung ist möglich. Der Zahnkranz ist dann am Rundklärbecken ortsfest vorgesehen und es ist ein Antriebsmotor mit Ritzel auf dem Rahmen und damit umlaufend angeordnet. Die Stromzuführung erfolgt in diesem Fall durch eine Schleifringabnahme. Bei ortsfester Anordnung des Antriebsmotors besteht auch die Möglichkeit, diesen unter Wasser ortsfest anzuordnen, so daß sich in der Stromzuführung keinerlei Probleme ergeben und dann sämtliche Teile des Unterwasserräumers unterhalb der Wasseroberfläche angeordnet sind.

Radial außen oder innen ist im Bereich der Beckensohle ein ortsfester Spurkranz vorgesehen, an dem und auf dem der Rahmen mit dem Räumschild abgestützt ist. Die Auflagerung auf dem Spurkranz erfolgt zweckmäßig durch mehrere Spurkranzräder, die zur Aufnahme bzw. Übertragung von horizontalen wie auch vertikalen Kräften geeignet sind.

Das Räumschild kann in mehrere Teilräumschilde aufgeteilt sein, die schrägstehend zur Umlaufrichtung einander überlappend am Rahmen angeordnet sind. Die Ausbildung des Rahmens unter Wasser wird dabei vorteilhaft dazu genutzt, um das Räumschild in mehrere Teilräumschilde aufzuteilen, so daß sich die Möglichkeit der Schrägstellung ergibt, die bei einem radial durchgehenden Räumschild nicht gegeben ist. Damit wird gleichsam eine Spiralförderwirkung erzielt, d. h. der Schlamm wird bei der Rotation der Teilräumschilde zur Mitte des Rundklärbeckens hin gefördert. In Verbindung mit solchen Ausführungsformen kann auf die konische Ausbildung der Beckensohle verzichtet werden, indem durch die schrägstehende Anordnung der Teilräumschilde die nach innen gerichtete Kraftkomponente bereitgestellt wird.

Das Räumschild oder die Teilräumschilde können durch Saugtüten ergänzt oder ersetzt sein, über die der Abzug des Schlamms zentrisch über ein dort angeordnetes Abzugsrohr erfolgt. Unter solchen Saugtüten werden glockenartige Sauger verstanden, mit deren Hilfe der sedimentierte Schlamm während der Bewegung des Unterwasserräumers aufgenommen und abgezogen wird. Auch eine gemischte Bauweise aus Teilräumschilden und Saugtüten ist möglich. Es entfällt dann die Anordnung eines konischen Trichters im Mittelbereich des Rundklärbeckens und die Beckensohle kann vorteilhaft horizontal durchgehend ausgebildet sein.

Der Rahmen und das Räumschild bzw. die Teilräumschilde können in doppelter Anordnung symmetrisch zu einer Ebene durch die Mittelachse des Rundklärbeckens vorgesehen sein. Damit kragen symmetrisch gleichsam zwei Arme aus. Die Vorrichtung ist gewichtsmäßig ausgeglichen; ihre Lagerung vereinfacht sich. Der Unterwasserräumer kann dabei mit halber Drehzahl angetrieben werden.

Die Erfindung wird anhand bevorzugter Ausführungsbeispiele weiter erläutert und beschrieben. Es zeigen:
- Figur 1: einen Vertikalschnitt durch ein Rundklärbecken mit einer ersten Ausführungsform des Unterwasserräumers,
- Figur 2: eine Draufsicht auf einen Ausschnitt des Rundklärbeckens mit Unterwasserräumer gemäß Figur 1,
- Figur 3: eine vergrößerte Darstellung der Einzelheit III aus Figur 1,
- Figur 4: eine ähnliche Schnittdarstellung wie Figur 1, jedoch bei einem zweiten Ausführungsbeispiel,
- Figur 5: eine Draufsicht auf das Rundklärbecken mit dem Unterwasserräumer gemäß Figur 4,
- Figur 6: eine vergrößerte Darstellung der Einzelheit VI in Figur 4,
- Figur 7: einen Vertikalschnitt durch ein Rundklärbecken mit einer weiteren Ausführungsform des Unterwasserräumers,
- Figur 8: einen Vertikalschnitt durch den Unterwasserräumer in einer dritten Ausführungsform mit feststehendem, innenliegenden Antrieb,
- Figur 9: eine Draufsicht gemäß der Linie IX-IX in Figur 8,
- Figur 10: eine Einzelheit X in vergrößerter Darstellung,
- Figur 11: einen Vertikalschnitt durch einen Unterwasserräumer mit umlaufendem, innenliegendem Antrieb,
- Figur 12: eine Draufsicht gemäß der Linie XII-XII in Figur 11, und
- Figur 13: die vergrößernde Darstellung einer Einzelheit XIII aus Figur 11.

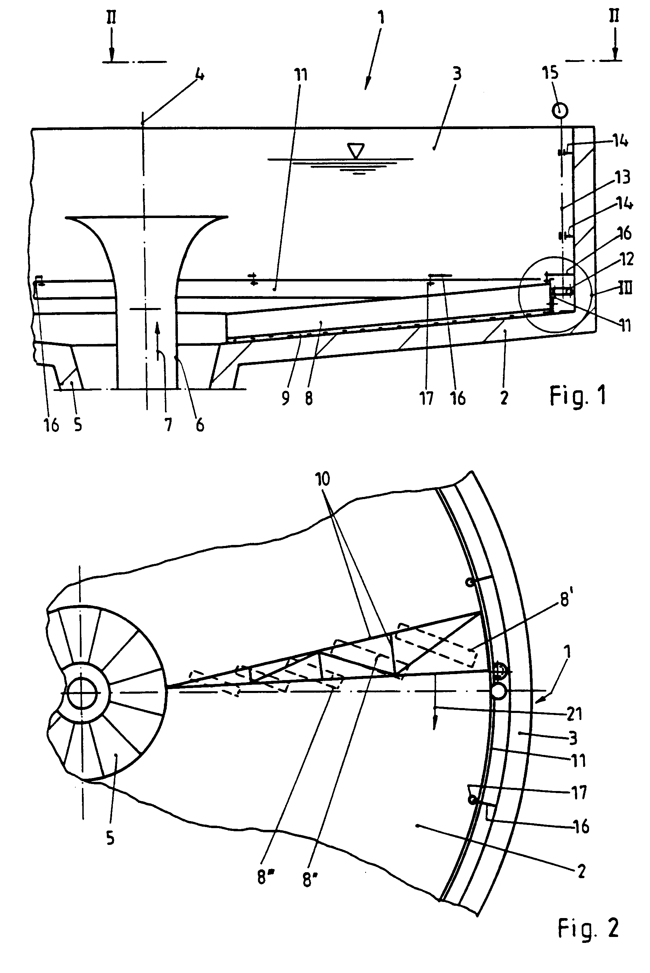

In Figur 1 ist ein Rundklärbecken 1 mit Beckensohle 2 und Beckenwand 3 im Schnitt dargestellt. Die Ausbildung ist drehsymmetrisch zu einer vertikalen Mittelachse 4. Die Beckensohle 2 ist leicht geneigt vorgesehen und geht im inneren Bereich in einen Trichter 5 über, der hier nur teilweise angedeutet ist und über den letztendlich der sedimentierte Schlamm aus dem Rundklärbecken abgezogen wird. Koaxial zu der Mittelachse 4 ist ein unterhalb der Wasseroberfläche endendes Einlaufrohr 6 angeordnet, durch welches das mit Sedimentationsstoffen behaftete Abwasser gemäß Pfeil 7 in den Innenraum des Rundklärbeckens 1 eingebracht wird.

Der neue Unterwasserräumer ist zumindest mit seinen wesentlichen Teilen unterhalb der Wasseroberfläche angeordnet. Es ist ein Räumschild 8, welches mit einer Gummilippe 9 ausgestattet sein kann, vorgesehen. Das Räumschild 8 erstreckt sich in radialer Richtung von einem inneren Bereich etwa im Anschluß an den Trichter 5 radial nach außen bis in den Bereich der Beckenwand 3. Das Räumschild 8 mit seiner Gummilippe 9 erstreckt sich parallel zur Beckensohle 2, ist also hier ebenfalls leicht geneigt vorgesehen. Dem Räumschild 8 ist ein Rahmen 10 zugeordnet, der, wie in Figur 2 dargestellt, zweckmäßig aus mehreren Verstrebungen zusammengesetzt ist. Der Rahmen 10 besitzt etwa sektorartige Gestalt und ist in diesem Fall, d. h. bei einem Außenantrieb, entsprechend der sektorartigen Aufteilung der Grundfläche der Beckensohle 2 angeordnet. Mit dem Rahmen 10 ist ein Zahnkranz 11 fest verbunden. Es ist erkennbar, daS sowohl das Räumschild 8 wie auch der Rahmen 10 und der Zahnkranz 11 in gedrängter Bauweise mit geringer Höhe weit unterhalb der Wasseroberfläche vorgesehen sind, um durch ihre Umlaufbewegung die Strömungsverhältnisse und insbesondere das Sedimentieren in dem Rundklärbecken 1 nicht zu stören.

Mit dem Zahnkranz 11 kämmt ein Antriebsritzel 12, welches am unteren Ende einer Welle 13 sitzt, die in Lagern 14 gelagert ist. Die Lager 14 sind innen an der Beckenwand 3 befestigt. Am oberen Ende der Welle 13 sitzt ein Motor 15, der hier nur schematisch angedeutet ist und insbesondere als Getriebemotor ausgebildet sein kann. Über den Umfang der Beckenwand 3 verteilt sind weitere Lager 16 in Abständen vorgesehen, die Führungsrollen 17 für den Zahnkranz 11 oder ein mit diesem verbundenes Profil 18 aufweisen. Auf der Beckensohle 2 im radial außenliegenden Bereich ist ein Spurkranz 19 ortsfest gelagert, auf dem sich zweckmäßig mindestens zwei Spurkranzräder 20 abstützen, die außen an dem Rahmen 10 gelagert sind. In Verbindung mit dieser Lagerung und den Führungsrollen 17 erhält damit der Rahmen 10 von außen radial nach innen einkragend seine Stabilität, so daß er auch in der Lage ist, beim angetriebenen Umlauf entsprechende Momente aufzunehmen, wenn seine Gummilippe 9 an der Beckensohle 2 entlangstreift. Die umlaufende Bewegung des Rahmens 10 mit dem Räumschild 8 wird über den Motor 15 und die Welle 13 nach unten geführt und über das Antriebsritzel 12 auf den Zahnkranz 11 übertragen. Da der Motor 15 ortsfest angeordnet ist und sich oberhalb des Wasserspiegels befindet, ist seine Stromzuführung problemlos. Es ist allerdings auch möglich, auf die hochgeführte Welle 13 zu verzichten und einen Unterwassermotor für den Antrieb des Antriebsritzels 12 vorzusehen. Man erkennt aus Figur 1, daß oberhalb des Rahmens 10 und des Zahnkranzes 11 ein beachtlich großer Freiraum entsteht, der für die Unterbringung von die Sedimentation begünstigenden Einbauten genutzt werden kann. Es versteht sich, daß das Räumschild 8 sehr langsam laufend angetrieben wird, um die Rührwirkung möglichst gering zu halten und andererseits dennoch einen Transport des sedimentierten Schlamms radial von außen nach innen, also letztlich in den Trichter 5 hinein, zu bewirken. Um diesen Schlammtransport noch zu begünstigen, ist es möglich, wie in Figur 2 in gestrichelter Linienführung angedeutet, das Räumschild 8 in mehrere Teilräumschilde 8', 8'' usw. aufzuteilen, um diese Teilräumschilde 8', 8'' usw. schräg zur Umlaufrichtung gemäß Pfeil 21 anordnen zu können. Die Anordnung ist dabei zweckmäßig so getroffen, daS sich die benachbarten Teilräumschilde 8', 8'' usw. in radialer Richtung überlappen.

Die in den Figuren 4 bis 6 dargestellte Ausführungsform des Unterwasserräumers stimmt mit der Ausführungsform gemäß den Figuren 1 bis 3 insofern überein, als auch hier ein äußerer Antrieb verwirklicht ist. Der Rahmen 10 ist auch hier sektorartig gestaltet und sinngemäß (Figur 5) angeordnet. Der Zahnkranz 11 ist hier jedoch nicht Bestandteil des Rahmens 10. Der Zahnkranz 11 ist hier ortsfest an dem ortsfesten Profil 18 vorgesehen und beispielsweise mit der Beckensohle 2 verschraubt. Der Rahmen 10 besitzt einen Vertikalträger 22, der durch dünne Streben 23 ausgesteift und gehalten sein kann. Am Vertikalträger 22 und damit am Rahmen 10 sitzen nunmehr die Lager 14 für die Welle 13, an deren oberem Ende auch hier der Motor 15 angedeutet ist. Mit der Welle 13 bzw. deren unterem Ende ist das Antriebsritzel 12 drehfest verbunden, so daß all diese Teile mit dem Rahmen 10 umlaufen. Dabei stützt sich das Antriebsritzel 12 in dem ortsfesten Zahnkranz 11 ab. Führungsrollen 24 dienen der Abstützung des Rahmens 10 an dem Profil 18. Das Profil 18 kann gleichzeitig auch zur Auflagerung des Spurkranzes 19 eingesetzt werden, auf dem die beiden Spurkranzräder 20 laufen. Der Räumschild 8 mit der Gummilippe 9 kann infolge der Schwerkrafteinwirkung auf der Beckensohle 2 schleifend aufgelagert sein. Es besteht jedoch auch die Möglichkeit, zusätzlich ein Laufrad 25 (Figur 4) am radial inneren Ende des Rahmens 10 anzuordnen, um das Räumschild 8 hier zusätzlich innen abzustützen.

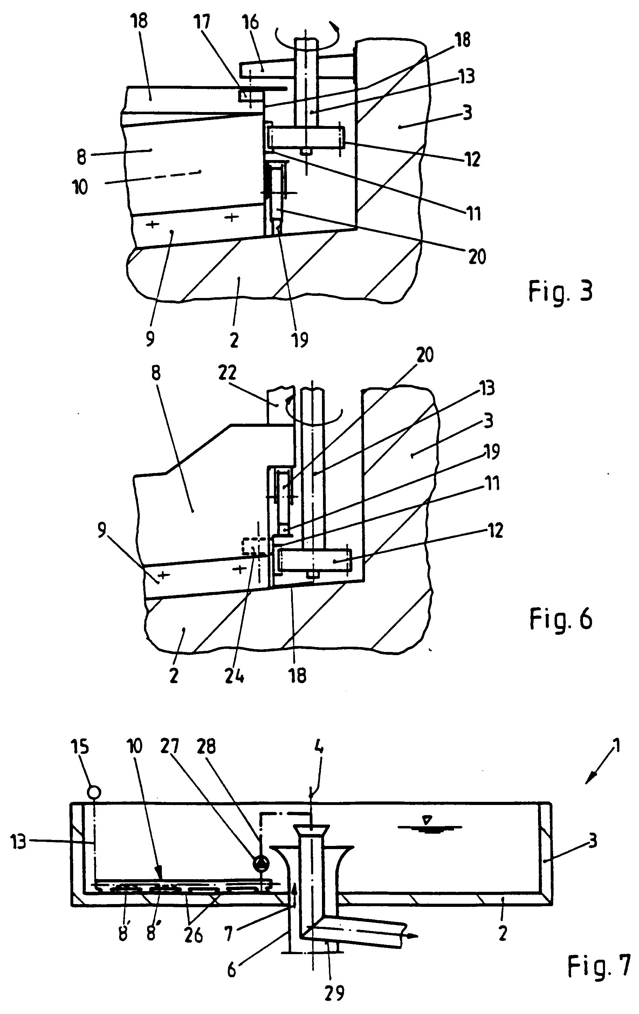

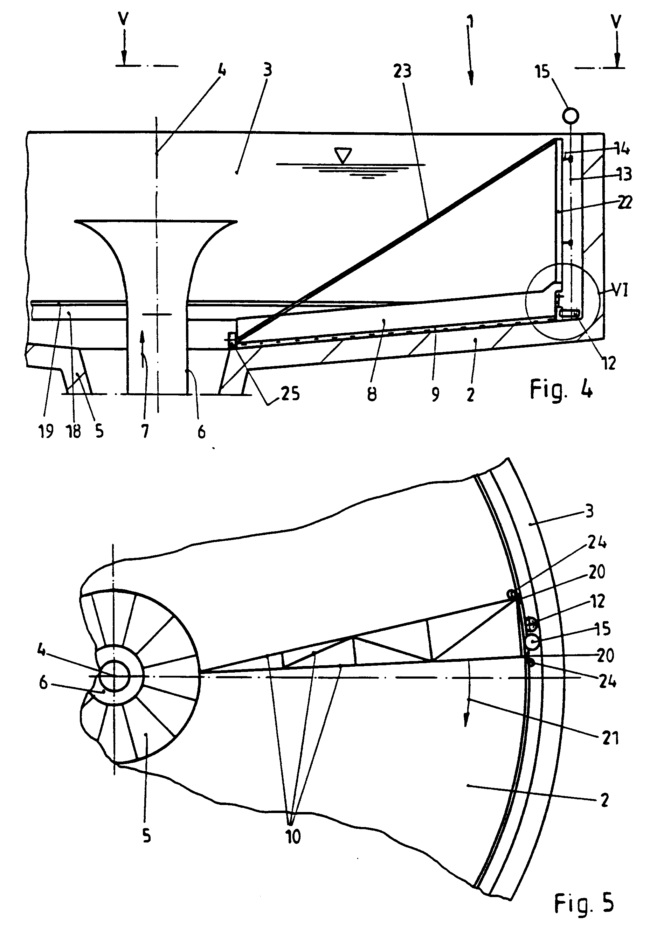

Figur 7 verdeutlicht in schematischer Weise eine Ausführungsform, bei der der Rahmen 10 zumindest teilweise mit Saugtüten 26 besetzt ist, die der Oberfläche der Beckensohle 2 zugekehrt am Rahmen 10 angeordnet sind. Die Anordnung ist zweckmäßig so getroffen, daß die gesamte Oberfläche der Beckensohle 2 bestrichen wird. Über eine Pumpe 27 und eine Druckleitung 28 wird das abgesaugte Sediment über ein zentral zur Achse 4 fest angeordnetes Abzugsrohr 29 abgeführt. Auch die Ableitung durch Unterdruck nach dem Hebeprinzip kann hier angewendet werden. Der umlaufende Antrieb des Rahmens 10 kann alternativ auf die zwei Arten herbeigeführt werden, die anhand der Ausführungsbeispiele der Figuren 1 bis 3 einerseits und 4 bis 6 andererseits bereits beschrieben worden sind. Der besondere Vorteil dieser Ausführungsform gemäß Figur 7 liegt darin, daß der Trichter 5 in Fortfall kommen kann und die Beckensohle 2 horizontal durchgehend gerade ausgebildet werden kann. Die Herstellung eines solchen Rundklärbeckens ist erheblich einfacher als mit geneigter Beckensohle 2 und anschließendem Trichter 5. Auch eine gemischte Bauweise unter Verwendung von Saugtüten 26 einerseits und Teilräumschilden 8', 8'' andererseits ist möglich, wie dies in Figur 7 gestrichelt angedeutet ist.

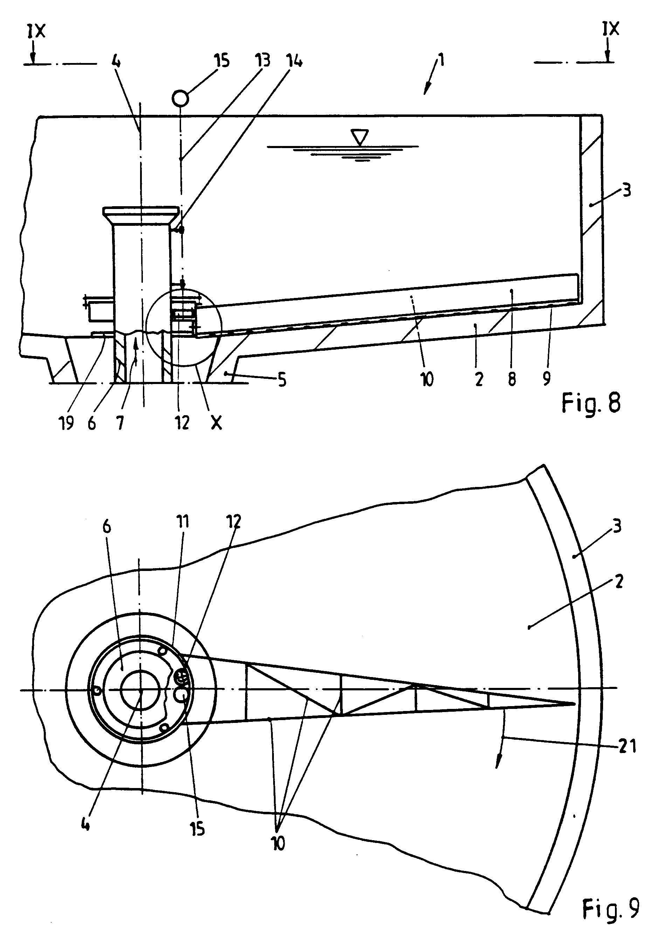

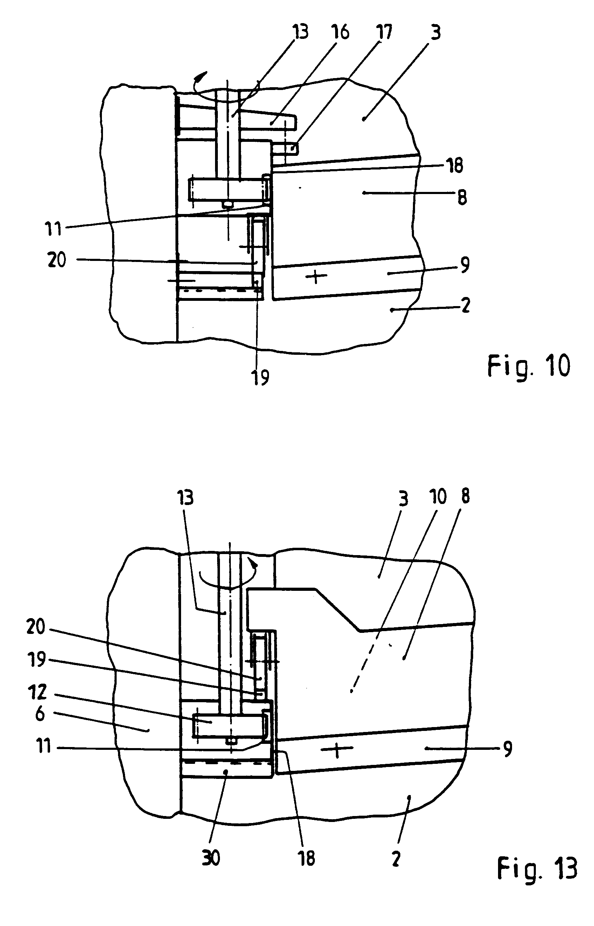

Die Ausführungsform der Figuren 8 bis 10 zeigt den Unterwasserräumer mit innenliegendem Antrieb, also in der Nähe der Mittelachse 4. Die Ausführungsform zeigt Ähnlichkeiten mit der Ausführungsform gemäß den Figuren 1 bis 3, bei der jedoch der Antrieb radial außen angeordnet ist. Um das Einlaufrohr 6 herum erstreckt sich der ortsfeste Spurkranz 19. Mit dem Räumschild 8 ist das Profil 18 verbunden, welches auf seiner Innenseite den Zahnkranz 11 trägt und ansonsten über Spurkranzräder 20 auf dem Spurkranz 19 abgestützt ist. Lager 16 halten Führungsrollen 17, die innerhalb oder außerhalb des Profils 18 angeordnet sein können. Die Welle 13 ist in Lagern 14 drehbar aber ortsfest gehalten, die wiederum am Einlaufrohr 6 befestigt sein mögen. Am oberen Ende der Welle 13 befindet sich der Motor 15, während das untere Ende mit dem Antriebsritzel 12 versehen ist, welches in Figur 9 lediglich zur Klarstellung versetzt zum Motor 12 verdeutlicht ist. In diesem Fall erstreckt sich der Rahmen 10 radial von innen nach außen und er besitzt eine im Vergleich zu dem Rundklärbecken 1 umgekehrt angeordnete, sektorartige Gestalt, d. h. er besitzt innen eine Breite und läuft radial außen spitz aus.

Vorteilhaft ist es, wenn nicht nur ein Räumarm mit Rahmen 10 und Räumschild 8 (wie dargestellt) vorgesehen ist, sondern eine Doppelanordnung in symmetrischer Bauweise. Der gemeinsame Rahmen erstreckt sich dann etwa durchmesserartig durch das gesamte Rundklärbecken 1 und die beiden Räumschilde 8 sind über das Profil 18 und den Zahnkranz 11 miteinander verbunden. Durch diesen gewichtsmäßigen Ausgleich wird die Lagerung des Unterwasserräumers einfacher und der Antrieb kann mit halber Drehzahl erfolgen. Die für die Sedimentation negative Rührwirkung ist vergleichsweise mehr als halbiert. Eine solche ausgeglichene Bauart ist auch dann möglich, wenn der Antrieb radial außen angreift.

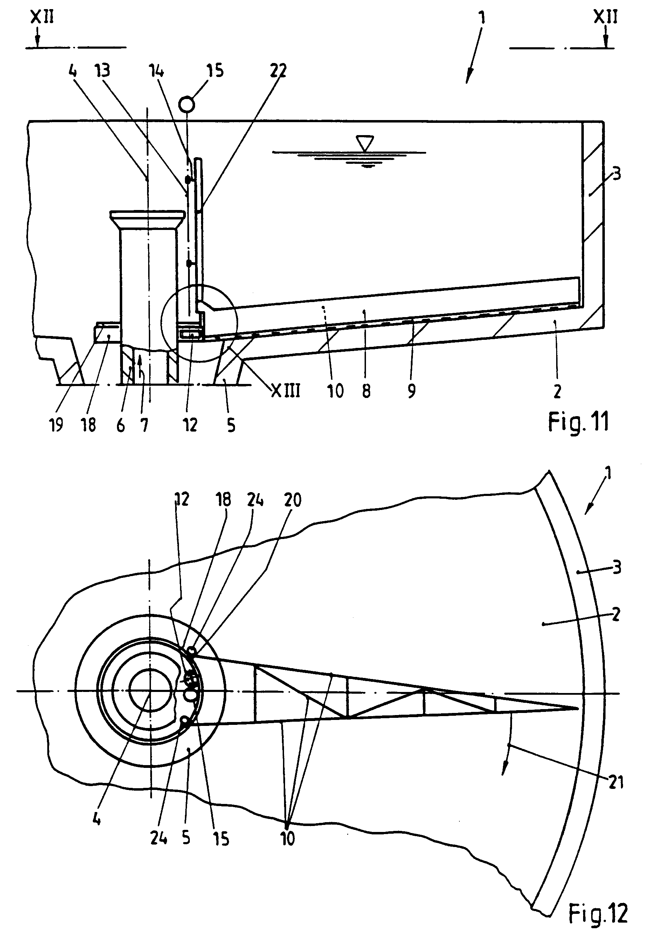

Die Ausführungsform der Figuren 11 bis 13 zeigt auch einen innenliegenden Antrieb, bei dem jedoch der Motor 15 umlaufend vorgesehen ist. Diese Ausführungsform zeigt Gemeinsamkeiten mit der Ausführungsform gemäß den Figuren 4 bis 6. Vom Rahmen 10 erhebt sich ein Vertikalträger 22, der die Lager 14 für die Welle 13 trägt. Am oberen Ende der Welle 13 ist der Motor 15 und am unteren Ende das Antriebsritzel 12 angedeutet. Das Profil 18 ist hier ortsfest gelagert, und zwar entweder am Einlaufrohr 6 mit Hilfe mehrerer Konsolen 30 (Figur 13) oder aber direkt auf der Beckensohle 2, wenn diese beispielsweise horizontal durchgehend ausgebildet ist, wie dies Figur 7 zeigt. Innen am Profil 18 ist der Zahnkranz 11 ortsfest gelagert, mit dem das Antriebsritzel 12 kämmt. Auf dem Profil 18 lagert ebenfalls ortsfest der Spurkranz 19, dem am Rahmen 10 befestigte Spurkranzräder 20 zugeordnet sind. Der Rahmen 10 ist als versteifter, flachbauender Rahmen ausgebildet und umgekehrt sektorartig relativ zu dem Rundklärbecken 1 angeordnet, wie dies auch bereits das Ausführungsbeispiel der Figuren 8 bis 10 zeigt. Auch eine durchmesserartige, symmetrische Doppelanordnung mit zwei Räumarmen ist möglich.

Es versteht sich, daß, obwohl in den Ausführungsbeispielen der Figuren 8 bis 13 immer ein durchgehendes Räumschild 8 mit Gummilippe 9 dargestellt ist, auch Teilräumschilde eingesetzt werden können, die auch mit Saugtüten 26 (Figur 7) ergänzt oder durch solche ersetzt werden können. Die dann erforderliche Druckleitung 28 (Figur 7) kann besonders einfach an dem Vertikalträger 22 (Figur 11) gelagert werden, so daß der Abzug des sedimentierten Schlamms dann über ein zentrales Abzugsrohr 29 erfolgen kann.

### BEZUGSZEICHENLISTE

- 1: = Rundklärbecken
- 2: = Beckensohle
- 3: = Beckenwand
- 4: = Mittelachse
- 5: = Trichter
- 6: = Einlaufrohr
- 7: = Pfeil
- 8: = Räumschild
- 9: = Gummilippe
- 10: = Rahmen
- 11: = Zahnkranz
- 12: = Antriebsritzel
- 13: = Welle
- 14: = Lager
- 15: = Motor
- 16: = Lager
- 17: = Führungsrolle
- 18: = Profil
- 19: = Spurkranz
- 20: = Spurkranzrad
- 21: = Pfeil
- 22: = Vertikalträger
- 23: = Streben
- 24: = Führungsrolle
- 25: = Laufrad
- 26: = Saugtüten
- 27: = Pumpe
- 28: = Druckleitung
- 29: = Abzugsrohr
- 30: = Konsole

## Patentansprüche

1. Unterwasserräumer für Rundklärbecken (1) mit einem an der Beckensohle (2) des Rundklärbeckens (1) entlangstreichenden, sich etwa radial erstreckenden Räumschild (8), das umlaufend angetrieben ist, dessen Antrieb radial nach außen oder radial nach innen am Räumschild (8) über einen unter Wasser vorgesehenen Zahnkranz (11) angreift und nur für die umlaufende Bewegung des Räumschilds (8) bestimmt ist, wobei das Räumschild (8) und ein diesem zugeordneter, in Draufsicht sektorartig gestalteteter und sich im wesentlichen in einer horizontalen oder geneigten Ebene parallel zur Beckensohle (2) erstreckender Rahmen (10) eine unter Wasser angeordnete Baueinheit bilden, wobei radial außen oder innen im Bereich der Beckensohle (2) ein ortsfester Spurkranz (19) vorgesehen ist, an dem und auf dem der Rahmen (10) mit dem Räumschild (8) abgestützt ist.

2. Unterwasserräumer nach Anspruch 1, dadurch gekennzeichnet, daß der Zahnkranz (11) an dem Rahmen (10) des Räumschilds (8) und damit umlaufend angeordnet ist, und daß ein Antriebsmotor (15) mit Antriebsritzel (12) ortsfest im Bereich der Beckenwand (3) oder im Mittelbereich am Rundklärbecken (1) vorgesehen ist.

3. Unterwasserräumer nach Anspruch 1, dadurch gekennzeichnet, daß der Zahnkranz (11) am Rundklärbecken (1) ortsfest vorgesehen ist, und daß ein Antriebsmotor (15) mit Antriebsritzel (12) auf dem Rahmen (10) und damit umlaufend angeordnet ist.

## Claims

1. Underwater clearing apparatus for round sewage treatment basins (1) with a clearing device (8) extending approximately radially, the clearing device (8) being revolvingly driven and sweeping along the bottom (2) of the round sewage treatment basin (1), the drive of which being coupled to the clearing device (8) radially on the outside or radially on the inside by a toothed ring (11) and being exclusively provided for the revolving movement of the clearing device (8), wherein the clearing device (8) and a frame (10) being allocated to the clearing device (8) form a unit being arranged under water, the frame (10) in top view being designed to be sector-like and extending in a substantially horizontal or in an inclined plane parallel to the bottom (2) of the basin, wherein a fixed flange (19) is provided radially on the outside or on the inside in the region of the bottom (2) of the basin, the frame (10) with the clearing device (8) being supported on the fixed flange (19).

2. Underwater clearing apparatus according to claim 1, characterized in that the toothed ring (11) is arranged on the frame (10) of the clearing device (8) and therefore it is arranged revolvingly, and that a motor (15) with a driving pinion (12) is fixedly arranged in the region of the wall (3) of the basin, or in the centre area of the round sewage treatment basin (1).

3. Underwater clearing apparatus according to claim 1, characterized in that the toothed ring (11) is fixedly arranged on the round sewage treatment basin (1), and that a motor (15) with a driving pinion (12) is arranged on the frame (10) and therefore it is arranged revolvingly.

## Revendications

1. Racleur immergé pour bassins circulaires de décantation (1) comportant une lame de raclage (8) s'étendant à peu près radialement, passant le long de la sole (2) du bassin circulaire de décantation (1), et qui est entraînée en rotation, dont le dispositif d'entraînement agit radialement vers l'extérieur ou radialement vers l'intérieur sur la lame de raclage (8), par l'intermédiaire d'une couronne dentée (11) prévue sous l'eau et qui n'est destinée qu'au mouvement de rotation de la lame de raclage (8), la lame de raclage (8) et un cadre (10) associé à celle-ci, qui vu de dessus forme un secteur, et qui s'étend sensiblement dans un plan horizontal ou incliné parallèlement à la sole (2) du bassin, formant une unité de construction disposée sous l'eau, un boudin (19) fixe étant prévu radialement à l'extérieur ou à l'intérieur dans la région de la sole (2) du bassin, contre lequel et sur lequel prend appui le cadre (10) avec la lame de raclage (8).

2. Racleur immergé selon la revendication 1, caractérisé en ce que la couronne dentée (11) est montée sur le cadre (10) de la lame de raclage (8) de manière à tourner avec celui-ci, et un ce qu'un moteur d'entraînement (15) avec pignon d'entraînement (12) est prévu stationnaire dans la région de la paroi (3) du bassin ou dans la région centrale du bassin circulaire de décantation (1).

3. Racleur immergé selon la revendication 1, caractérisé en ce que la couronne dentée (11) est prévue stationnaire sur le bassin circulaire de décantation (1), et en ce qu'un moteur d'entraînement (15) avec pignon d'entraînement est monté sur le cadre (10) de manière à tourner avec celui-ci.
